# EUROPEAN PATENT APPLICATION

(11) **EP 4 325 767 A1**
(43) Date of publication of application: **21.02.2024**
(21) Application number: 22190913.8
(22) Date of filing: 18.08.2022
(51) Int. Cl.: H04L 9/00

(54) **GENERATION OF A NON-FUNGIBLE TOKEN**

(71) Applicant: Siemens Aktiengesellschaft, 80333 München (DE)
(72) Inventor: Singh, Saurabh Narayan, 81739 München (DE); Hofmann, Benedikt, 81739 München (DE)
(74) Representative: Siemens Patent Attorneys

(57) **Abstract**

The invention provides a computer-implemented method and a system (SYS) for generating a non-fungible token, comprising the method steps:
- generating (S1) a non-fungible token (NFT) for a digital asset (DA), wherein the non-fungible token comprises a link (LN) to the digital asset, and wherein the non-fungible token (NFT) is to be stored on a blockchain network (BCN),
- assigning (S2) a first user information (UI) of a first user of the non-fungible token to the non-fungible token,
- digitally (S3) signing the non-fungible token using a digital signature (DS) of the first user,
- issuing (S4) a verifiable credential (VC) for the non-fungible token by an issuing unit (ISU), wherein the verifiable credential (VC) depends on a content (C) of the link to the digital asset,
and
- assigning (S5) the verifiable credential (VC) to the non-fungible token (NFT).

## Description

The present invention relates to a computer-implemented method and a system for generating a non-fungible token, a data structure for storing a non-fungible token and the use of said data structure in said computer-implemented method, as well as a computer program product.

A non-fungible token (NFT) is a unique digital security or digital identifier for an asset. The NFT is stored in a distributed ledger, e.g., a blockchain. It can be for example used to certify ownership of the asset. The NFT usually is directly linked to the asset, which can be a physical and/or digital asset. A NFT can be used to verify and prove that a user is the owner of the asset. However, the content behind the NFT cannot be verified. The ownership is verifiable because of the used public private key pair, but the content that is owned is usually stored on a separate server and the NFT usually only contains a pointer/link to the asset. It is therefore possible that the content behind an NFT is changed.

It is therefore an objective of the present invention to provide a method and a system to verify the content associated with an NFT.

The object is solved by the features of the independent claims. The dependent claims contain further developments of the invention.

The invention provides according to the first aspect a computer-implemented method for generating a non-fungible token, comprising the method steps:
- generating a non-fungible token for a digital asset, wherein the non-fungible token comprises a link to the digital asset, and wherein the non-fungible token is to be stored on a blockchain network,
- assigning a first user information of a first user of the non-fungible token to the non-fungible token,
- digitally signing the non-fungible token using a digital signature of the first user,
- issuing a verifiable credential for the non-fungible token by an issuing unit, wherein the verifiable credential depends on a content of the link to the digital asset, and
- assigning the verifiable credential to the non-fungible token.

It is an advantage of the invention that a content of the generated NFT can be verified. This provides higher security when transferring NFTs of digital assets. Therefore, using the verifiable credential, a user or owner of a NFT can verify whether the content is the original content. For example, if the link/URL changes or the content of the link changes, even if the NFT visualization remains the same, the content change can be detected. Furthermore, the NFT can be verified based on the digital signature, e.g., a certificate, of the first user, e.g., the creator or issuer of the NFT. This guarantees that the original NFT is being exchanged and duplicate NFTs cannot replicate the issuer certificate.

According to an embodiment of the invention the verifiable credential can be stored as part of the non-fungible token.

Therefore, the verifiable credential is directly coupled with the NFT. Preferably, the verifiable credential is stored in a data structure that stores the NFT.

According to an alternative embodiment of the invention the verifiable credential can be stored in a registry of the blockchain network.

Therefore, the verifiable credential can be publicly accessible.

According to an embodiment of the invention in case of a transfer of the non-fungible token to a second user, it can be checked whether the verifiable credential is issued by the issuing unit.

Therefore, it can be proven that the content behind the NFT has not changed. In other words, if the verifiable credential is issued by the issuing unit, this can be taken as a proof that the content of the link to the digital asset has not been changed. Furthermore, the content of the verifiable credential can be verified by the second user.

According to an embodiment of the invention in case of a transfer of the non-fungible token to a second user, the content of the link the non-fungible token links to can be checked using the verifiable credential.

Therefore, it can be proven that the content behind the NFT has not changed.

According to an embodiment of the invention the digital signature of the first user can be stored in a public registry and is publicly verifiable.

This enables public verification of the digital signature.

According to an embodiment of the invention in case of a transfer of the non-fungible token to a second user, the digital signature of the first user can be verified.

This guarantees that the original NFT is being exchanged and duplicate NFTs cannot replicate the issuer certificate.

According to an embodiment of the invention in case of a transfer of the non-fungible token to a second user another verifiable credential is issued by the issuing unit before the transfer.

This second verifiable credential can be for example used to verify the content at time or before the transfer.

According to an embodiment of the invention in case of a link rot of the link to the digital asset, the link is updated by the first user and an updated verifiable credential is issued by the issuing unit if the content of the link has not changed.

Therefore, link changes or the content of the link changes can be detected. For example, if a NFT contains an URL to resources which do not exist anymore. The owner of the NFT can relink the NFT to an updated URL which contains the same data. Preferably, a current owner or the first owner of the NFT has to approve the link update. A second user can then verify that the content stays the same.

The invention provides according to the second aspect a system for generating a non-fungible token, the system comprising:
- a blockchain network configured to store the non-fungible token,
- a generator configured
   - to generate a non-fungible token for a digital asset, wherein the non-fungible token comprises a link to the digital asset, and
   - to assign a first user information of a first user of the non-fungible token to the non-fungible token,
- a security module configured to digitally sign the non-fungible token using a digital signature of the first user,
- an issuing unit configured to issue a verifiable credential for the non-fungible token, wherein the verifiable credential depends on a content of the link to the digital asset, and
- an assignment module configured to assign the verifiable credential to the non-fungible token.

The system is therefore adapted to perform the method steps of the computer-implemented method as described above. The system preferably comprises software and/or hardware components, in particular, at least one processor.

The invention provides according to a third aspect a data structure adapted for storing a non-fungible token relating to a digital asset, the data structure comprising:
- a first user information of a first user,
- a digital signature of the first user,
- a link to the digital asset, and
- an assignment to a verifiable credential that depends on a content of the link.

Furthermore, the NFT may comprise an address of the first user/the owner and a unique identity of the NFT. The data structure can be stored on a blockchain.

Furthermore, the invention provides the use of the said data structure in a computer-implemented method as described above.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: an exemplary embodiment of a computer-implemented method for generating a non-fungible token; and
- Fig. 2:: an exemplary embodiment of a system for generating a non-fungible token and for use of a data structure for storing the non-fungible token.

Equivalent parts in the different figures are labeled with the same reference signs.

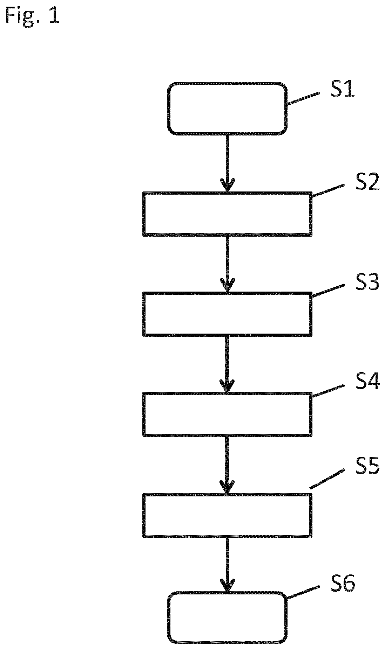

Figure 1 shows an exemplary embodiment of a computer-implemented method for generating a non-fungible token for a digital asset. A digital asset can be for example a computer-readable data structure, a digital file, a dataset, a computer simulation model or a 3D design of a physical system. In particular, the digital asset can be closely related to a physical asset, e.g., the digital asset can be for example a digital representation of the physical asset. For example, the digital asset can be a computer simulation model for an industrial system, e.g., an industrial plant or device.

The method comprises the following steps:
In a first step S1, the non-fungible token is generated or minted for the digital asset by a first user/by a creator using a blockchain-enabled device that is connected to a blockchain network. In other words, the non-fungible token is minted using blockchain technology. The minting of the non-fungible token can be performed by means of a smart contract. The smart contract can be either defined for said non-fungible token or for multiple non-fungible tokens.

Preferably, the digital asset is stored in a decentralized storage that can be connected to the blockchain network. When minting the non-fungible token, a link to the digital asset is created and a unique identity for the digital asset is generated. The non-fungible token is stored in a data structure that comprises the address of the first user/the creator. Furthermore, the non-fungible token comprises the link to the digital asset. The non-fungible token is to be stored in a data structure on the blockchain network.

In the next step S2, a first user information of a first user of the non-fungible token is assigned to the non-fungible token. In other words, the creator can be assigned to the non-fungible token as the first owner of the non-fungible token. The first user/the creator/the owner of the non-fungible token can be an organization, a human or a device. For example, the first user information is stored in the data structure storing the non-fungible token. Alternatively, a pointer/link to the first user information is stored with the non-fungible token.

In the next step S3, the non-fungible token is digitally signed using a digital signature of the first user. It is possible that this step, i.e., digitally signing the non-fungible token, is part of the minting process (step S1). Furthermore, it is possible that the smart contract for minting the non-fungible token(s) is digitally signed using a digital signature by the first user. In particular, an asymmetric cryptographic method is used. Preferably, the digital signature is stored in a public registry and is publicly verifiable. For example, when an organization needs to mint a non-fungible token, the organization must make sure that they have a digital signature which can be looked up for example in a lookup map. Then, the newly minted status of non-fungible token is informed to an issuing unit.

In the next step S4, a verifiable credential is issued for the non-fungible token by the issuing unit, e.g., an issuing authority, wherein the verifiable credential depends on a content of the link to the digital asset. In other words, the verifiable credential depends on the original link content.

In the next step S5 the verifiable credential is assigned to the non-fungible token. For example, the verifiable credential can be stored as part of the non-fungible token, i.e., in the data structure of the non-fungible token. Alternatively, the verifiable credential can be stored in a registry of the blockchain network.

In the next step S6, the generated non-fungible token is provided to the blockchain network. For example, the non-fungible token can be used to verify the content of the link stored in the non-fungible token. Therefore, the non-fungible token can be used to transfer (e.g., sale) a digital asset.

In case of a transfer of the non-fungible token to a second user, the non-fungible token can be for example listed on a marketplace. When a user wants to buy the non-fungible token, the verifiable credential associated with the non-fungible token can be checked. If the credential is issued by issuing unit, it is a proof that the content behind the non-fungible token has not been changed. Furthermore, the original issuer signature can be checked to verify that it is the same non-fungible token that was originally issued by the first user. If the second user can successfully verify the credential and proof of origin, the non-fungible token's owner is updated to the second user.

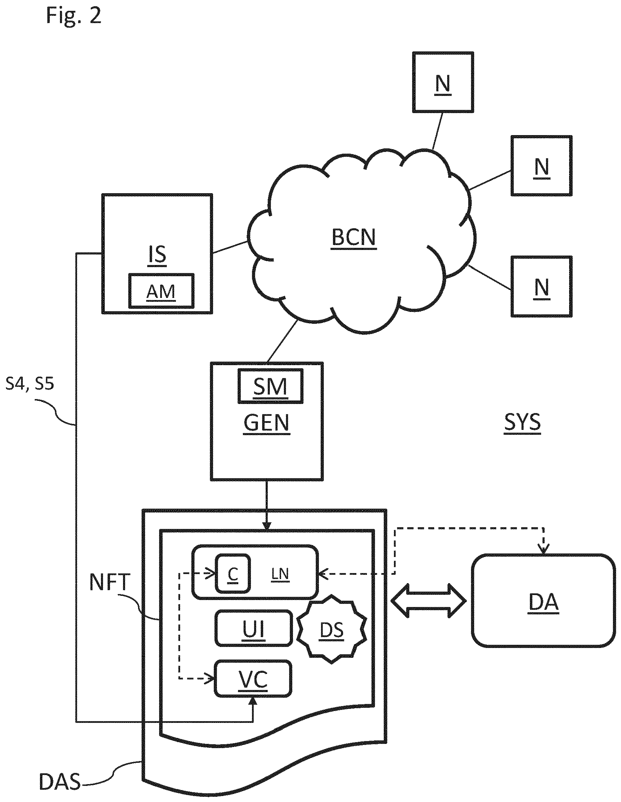

Figure 2 shows an exemplary embodiment of a system SYS for generating/minting a non-fungible token and for use of a data structure for storing the non-fungible token.

In particular, a non-fungible token NFT is a cryptographic asset on a blockchain. The non-fungible token NFT preferably has a unique identifier and metadata that distinguish it from other non-fungible tokens. The non-fungible token NFT is stored in a data structure DAS on a blockchain.

The system SYS comprises a blockchain network BCN, wherein the blockchain network BCN comprises a plurality of nodes N running a blockchain/the blockchain's software. The blockchain network BCN is configured to store the generated/minted non-fungible tokens. The system SYS further comprises a generator GEN for generating/minting non-fungible tokens for digital assets, a security module SM that can be part of or coupled with the generator GEN, an issuing unit ISU, and an assignment module AM that can be part of or coupled with the issuing unit ISU. Preferably, the generator GEN, the security module SM, the issuing unit ISU, and/or the assignment module AM can be coupled to the blockchain network BCN such that data can be transferred.

The generator GEN is configured to generate a non-fungible token NFT for a digital asset DA. The digital asset DA is for example stored on a decentralized data storage that can be connected to the blockchain network BCN. The generation of the non-fungible token NFT comprises the creation of a link LN to the digital asset DA. For example, the digital asset DA can be a 3D design for additive manufacturing a workpiece. The link LN can be for example an URL that links to said 3D design.

Furthermore, the generation of the non-fungible token NFT comprises assigning a first user information UI of a first user, i.e., the creator of the non-fungible token NFT, to the non-fungible token NFT. For example, the first user information UI can comprise a name and/or unique identifier of the creator of the non-fungible token NFT. Therefore, the creator is assigned to the non-fungible token NFT.

The security module SM is configured to digitally sign the non-fungible token using a digital signature DS of the first user/the creator of non-fungible token NFT. When the non-fungible token NFT is minted, it is stored on the blockchain.

The issuing unit ISU is configured to issue a verifiable credential VC for the non-fungible token, wherein the verifiable credential VC depends on a content C of the link LN to the digital asset DA. The issuing unit ISU can be for example part of a consortium of credential issuers. The verifiable credential VC is issued for the original content C of the link to the digital asset DA, i.e., the verifiable credential is created for the 3D design associated with the link LN.

The assignment module AM is configured to assign the verifiable credential VC to the non-fungible token NFT. For example, the verifiable credential VC is stored as part of the non-fungible token NFT. Alternatively, the verifiable credential VC is stored in a registry of the blockchain network BCN.

The non-fungible token NFT therefore is stored in a data structure DAS comprising a first user information UI of a first user, a digital signature DS of the first user, a link LN to the digital asset DA, and a verifiable credential VC or a link to the verifiable credential VC, wherein the verifiable credential VC depends on a content C of the link LN to the digital asset DA. The data structure DAS for storing the non-fungible token NFT can be for example used for transferring the non-fungible token NFT and verifying the content and the uniqueness of the non-fungible token NFT.

For example, in case of a transfer of the non-fungible token NFT from the creator to another user, the following steps may be performed:
When the creator of an asset wants to transfer the non-fungible token NFT, he requests another verifiable credential for it from the issuing unit ISU. The issuing unit ISU creates this further verifiable credential for the NFT and changes the state of the NFT to in-transfer and placed in an escrow. This step makes sure that the owner of the NFT cannot make changes in the content between requesting verifiable credentials and transferring the non-fungible token NFT. The non-fungible token NFT is then listed on a marketplace. When a user wants to buy the non-fungible token NFT, he can check the verifiable credential VC associated with the non-fungible token NFT. If the credential is issued by issuing unit ISU, it is a proof that the content behind the non-fungible token NFT has not been changed. Furthermore, he can check the original creator's digital signature DS to verify that it is the same non-fungible token NFT that was originally issued by the creator. If the user can successfully verify the credential and proof of origin, he can transfer the amount to escrow and the non-fungible token NFT's owner is updated to the new user in the blockchain.

In case of a link rot of the link LN to the digital asset DA, the link LN is updated by the first user, e.g., via the generator GEN, and an updated verifiable credential VC is issued by the issuing unit ISU if the content of the link has not changed.

Links which are a part of the non-fungible token NFT point to the contents of said non-fungible token NFT. For instance, the non-fungible token NFT does not contain the actual 3D design but a link to the 3D design. Such links can be subject to so-called link rot. When the link LN to the content of the non-fungible token NFT has rotted, the creator/first user of the non-fungible token NFT can change the link LN. To this end, the creator can update the link to the non-fungible token NFT, wherein the creator requests a new verifiable credential from the issuing unit ISU. It is also possible that a second user/owner of the non-fungible token NFT requests the link update. Then, the original creator of the non-fungible token NFT has to approve the update. The issuing unit ISU issues a new verifiable credential for the content and the new link, wherein the issuing unit ISU checks the conformity of the content.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for generating a non-fungible token (NFT), comprising the method steps:
- generating (S1) a non-fungible token (NFT) for a digital asset (DA), wherein the non-fungible token comprises a link (LN) to the digital asset, and wherein the non-fungible token is to be stored on a blockchain network (BCN),
- assigning (S2) a first user information (UI) of a first user of the non-fungible token to the non-fungible token,
- digitally (S3) signing the non-fungible token using a digital signature (DS) of the first user,
- issuing (S4) a verifiable credential (VC) for the non-fungible token by an issuing unit (ISU), wherein the verifiable credential depends on a content (C) of the link (LN) to the digital asset (DA), and
- assigning (S5) the verifiable credential (VC) to the non-fungible token (NFT).

2. Computer-implemented method according to claim 1, wherein the verifiable credential (VC) is stored as part of the non-fungible token (NFT).

3. Computer-implemented method according to claim 1, wherein the verifiable credential (VC) is stored in a registry of the blockchain network.

4. Computer-implemented method according to one of the preceding claims, wherein, in case of a transfer of the non-fungible token to a second user, it is checked whether the verifiable credential is issued by the issuing unit.

5. Computer-implemented method according to one of the preceding claims, wherein, in case of a transfer of the non-fungible token to a second user, the content of the link to which the non-fungible token links to is checked using the verifiable credential.

6. Computer-implemented method according to one of the preceding claims, wherein the digital signature (DS) of the first user is stored in a public registry and is publicly verifiable.

7. Computer-implemented method according to one of the preceding claims, wherein in case of a transfer of the non-fungible token to a second user, the digital signature (DS) of the first user is verified.

8. Computer-implemented method according to one of the preceding claims, wherein in case of a transfer of the non-fungible token to a second user another verifiable credential is issued by the issuing unit before the transfer.

9. Computer-implemented method according to one of the preceding claims, wherein in case of a link rot of the link (LN) to the digital asset, the link is updated by the first user and an updated verifiable credential is issued by the issuing unit if the content of the link has not changed.

10. System (SYS) for generating a non-fungible token (NFT), the system comprising:
- a blockchain network (BCN) configured to store the non-fungible token,
- a generator (GEN) configured
- to generate a non-fungible token (NFT) for a digital asset (DA), wherein the non-fungible token comprises a link (LN) to the digital asset (DA), and
- to assign a first user information (UI) of a first user of the non-fungible token to the non-fungible token,
- a security module (SM) configured to digitally sign the non-fungible token using a digital signature (DS) of the first user,
- an issuing unit (ISU) configured to issue a verifiable credential (VC) for the non-fungible token, wherein the verifiable credential depends on a content of the link to the digital asset, and
- an assignment module (AM) configured to assign the verifiable credential to the non-fungible token.

11. Data structure (DAS) adapted for storing a non-fungible token relating to a digital asset, wherein the data structure comprises:
- a first user information (UI) of a first user,
- a digital signature (DS) of the first user,
- a link (LN) to the digital asset (DA), and
- an assignment to a verifiable credential (VC) that depends on a content (C) of the link (LN).

12. Use of a data structure (DAS) according to claim 11 in a computer-implemented method according to one of the claims 1 to 9.

13. Computer program product directly loadable into the internal memory of a digital computer, comprising software code portions for performing the method steps of claims 1 to 9 when said computer program product is run on a computer.
